# EUROPEAN PATENT SPECIFICATION

(11) **EP 4 199 766 B1**
(45) Date of publication and mention of the grant of the patent: **04.06.2025**
(21) Application number: 21770291.9
(22) Date of filing: 01.09.2021
(51) Int. Cl.: A24F 40/44, A24F 40/46, A24F 40/51, A24F 40/57, A61M 11/04, A24F 40/10

(54) **AEROSOL GENERATOR FOR AN ELECTRONIC AEROSOL PROVISION SYSTEM**
AEROSOLERZEUGER FÜR EIN ELEKTRONISCHES AEROSOLBEREITSTELLUNGSSYSTEM
GÉNÉRATEUR D'AÉROSOL POUR UN SYSTÈME ÉLECTRONIQUE DE FOURNITURE D'AÉROSOL

(30) Priority: 14.09.2020 GB 202014422
(43) Date of publication of application: 28.06.2023
(73) Proprietor: Nicoventures Trading Limited, London WC2R 3LA (GB)
(72) Inventor: LEADLEY, David, London WC2R 3LA (GB)
(74) Representative: D Young & Co LLP
(86) International application number: PCT/GB2021/052257
(87) International publication number: WO 2022/053782

(56) References cited:
- WO-A1-2017/187148
- WO-A1-2019/029168
- WO-A1-2021/009483
- CN-U- 207 926 944
- US-A1- 2017 325 510
- US-A1- 2020 120 993

## Description

### Technical Field

The present disclosure relates to an aerosol generator for an electronic aerosol provision system, and electronic aerosol provision systems including the aerosol generator.

### Background

Many electronic aerosol provision systems, such as e-cigarettes and other electronic nicotine delivery systems that deliver nicotine by vaporising or heating a substrate material, are formed from two main components or sections, which may be termed a device and an article. The device is a control or power section or component, and may include a power source such as a battery, and a controller or control unit, comprising electronics configured to operate the system, such as circuitry and/or software. The article may be considered as a cartridge or cartomiser section, and includes a storage area for aerosol-generating material. The article may be intended to be disposable when the aerosolisable material is exhausted so that it is replaceable with a new article for use in conjunction with the device, where the device is intended to operate over the lifetime of many articles. Alternatively, the article may include a smaller disposable component or consumable containing the aerosolisable material which can be replaced when exhausted, or the article may be refillable with new aerosolisable material. The article and the device may be separate elements that couple together to form the system, or the system may have a unitary construction containing all the parts of the article and the device. In designs where the article is intended to be replaced, it can be considered as a consumable item, or simply a consumable.

In order to generate aerosol for provision from the system, an aerosol generator is included. Often this is located in the article / consumable, but may alternatively be in the device. One technique for forming aerosol is to heat the aerosol-generating material to cause vaporisation, the resulting vapour being entrained in a flow of air through the system to create the desired aerosol. Hence, many aerosol generators comprise an electrical heater to which aerosol-generating material is delivered from the storage area, for example by a capillary wick, the electrical heater being powered from the battery under the control of the controller in the device. Aerosol formation can be improved if the electrical heater is operated at a specified temperature. This may be implemented by measuring the heater's temperature and using this information to control the power supplied to the heater in order to maintain operation at the specified temperature. In order to achieve this, the heater temperature can be measured or otherwise determined, for example by using a temperature sensor in the vicinity of the heater or by measuring an electrical parameter of the heater, such as resistance, which varies with temperature in a known manner.

US 2017/325510 describes a heating device for an electronic cigarette, including a heater comprising a hollow metallic tube wound in a spiral form and located inside a tubular porous ceramic wicking part. A thermocouple is arranged inside the metallic tube.

CN 207926944 describes a tobacco heated product system with a thermocouple held on a ceramic heating plate by spot welding or sintering.

Other known devices include WO 2017/187148 which describes an electronic cigarette having a heating element embedded in a ceramic component, US 2020/120993 which describes a thermocouple used in conjunction with a non-ceramic heater, and WO 2019/029168 which describes a electronic cigarette with a heat-generating ceramic body.

Accurate temperature measurements that correlate well with the actual temperature of the heater are of benefit in achieving effective operation of the heater. Accordingly, effective approaches for determining the heater temperature are of interest.

### Summary

According to a first aspect of some embodiments described herein, there is provided an aerosol generator for an electronic aerosol provision system, comprising: an electrical heater comprising ceramic material; an aerosol-generating material transfer component for delivering aerosol-generating material from an aerosol-generating material storage area to the electrical heater for heating to generate aerosol; and a thermocouple embedded in the ceramic material such that a junction of the thermocouple is in contact with the ceramic material, and operable to provide a temperature-dependent voltage via the thermoelectric effect from which a temperature of the electrical heater can be determined.

According to a second aspect of some embodiments described herein, there is provided a consumable for an electronic aerosol provision system comprising an aerosol generator according to the first aspect and an aerosol-generating material storage area for storing aerosol generating material.

According to a third aspect of some embodiments described herein, there is provided an electronic aerosol provision system comprising an aerosol generator according to the first aspect, and a controller configured to determine a temperature of the electrical heater from the temperature-dependent voltage provided by the thermocouple, or configured to determine a temperature profile of the electrical heater from one or more temperature-dependent voltages.

These and further aspects of the certain embodiments are set out in the appended independent and dependent claims. It will be appreciated that features of the dependent claims may be combined with each other and features of the independent claims in combinations other than those explicitly set out in the claims. Furthermore, the approach described herein is not restricted to specific embodiments such as set out below, but includes and contemplates any appropriate combinations of features presented herein. For example, an electronic aerosol provision system or an aerosol generator or a consumable therefor may be provided in accordance with approaches described herein which includes any one or more of the various features described below as appropriate.

### Brief Description of the Drawings

Various embodiments of the invention will now be described in detail by way of example only with reference to the following drawings in which:
Figure 1 shows a simplified schematic cross-section through an example electronic aerosol provision system in which embodiments of the present disclosure can be implemented;
Figure 2 shows a perspective view of a first example ceramic heater;
Figure 3 shows a perspective view of a second example of a ceramic heater;
Figure 4 shows a perspective view of a third example of a ceramic heater;
Figure 5 shows a perspective view of a fourth example of a ceramic heater;
Figure 6 shows a cross-sectional view of a fifth example of a ceramic heater;
Figure 7 shows a schematic view of an example aerosol generator with a ceramic heater;
Figure 8 shows a perspective view of a further example aerosol generator with a ceramic heater;
Figure 9 shows a perspective view of an example aerosol generator with a composite ceramic structure;
Figure 10 shows a cross-sectional view of another example aerosol generator with a composite ceramic structure;
Figure 11 shows a schematic representation of an example aerosol generator with a unitary ceramic structure;
Figures 12(A) and 12(B) show side views of first and second examples of ceramic heaters formed from conductive ceramic;
Figures 13(A) and 13(B) show a perspective view and a cross-sectional view of a first example of a ceramic heater with a heating element;
Figures 14(A) and 14(B) show a perspective view and a cross-sectional view of a second example of a ceramic heater with a heating element;
Figure 15 shows a schematic side view of an example of a ceramic heater with multiple thermocouples;
Figure 16 shows a graph of an example temperature profile obtainable from the example heater in Figure 15;
Figure 17 shows a schematic side view of an example of a ceramic heater with a thermopile; and
Figure 18 shows an example circuit diagram of heater power and control circuitry for an aerosol provision system.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

As described above, the present disclosure relates to (but is not limited to) electronic aerosol or vapour provision systems, such as e-cigarettes. Throughout the following description the terms "e-cigarette" and "electronic cigarette" may sometimes be used; however, it will be appreciated these terms may be used interchangeably with aerosol (vapour) provision system or device. The systems are intended to generate an inhalable aerosol by vaporisation of a substrate (aerosol-generating material) in the form of a liquid or gel which may or may not contain nicotine. Additionally, hybrid systems may comprise a liquid or gel substrate plus a solid substrate which is also heated. The solid substrate may be for example tobacco or other non-tobacco products, which may or may not contain nicotine. The terms "aerosol-generating material" and "aerosolisable material" as used herein are intended to refer to materials which can form an aerosol, either through the application of heat or some other means. The term "aerosol" may be used interchangeably with "vapour".

As used herein, the terms "system" and "delivery system" are intended to encompass systems that deliver a substance to a user, and include non-combustible aerosol provision systems that release compounds from an aerosolisable material without combusting the aerosolisable material, such as electronic cigarettes, tobacco heating products, and hybrid systems to generate aerosol using a combination of aerosolisable materials, and articles comprising aerosolisable material and configured to be used within one of these non-combustible aerosol provision systems. According to the present disclosure, a "non-combustible" aerosol provision system is one where a constituent aerosolisable material of the aerosol provision system (or component thereof) is not combusted or burned in order to facilitate delivery to a user. In some embodiments, the delivery system is a non-combustible aerosol provision system, such as a powered non-combustible aerosol provision system. In some embodiments, the non-combustible aerosol provision system is an electronic cigarette, also known as a vaping device or electronic nicotine delivery (END) system, although it is noted that the presence of nicotine in the aerosolisable material is not a requirement. In some embodiments, the non-combustible aerosol provision system is a hybrid system to generate aerosol using a combination of aerosolisable materials, one or a plurality of which may be heated. Each of the aerosolisable materials may be, for example, in the form of a solid, liquid or gel and may or may not contain nicotine. In some embodiments, the hybrid system comprises a liquid or gel aerosolisable material and a solid aerosolisable material. The solid aerosolisable material may comprise, for example, tobacco or a non-tobacco product.

Typically, the non-combustible aerosol provision system may comprise a non-combustible aerosol provision device and an article (consumable) for use with the non-combustible aerosol provision device. However, it is envisaged that articles which themselves comprise a means for powering an aerosol generator or aerosol generating component may themselves form the non-combustible aerosol provision system. In some embodiments, the non-combustible aerosol provision device may comprise a power source and a controller. The power source may, for example, be an electric power source. In some embodiments, the article for use with the non-combustible aerosol provision device may comprise an aerosolisable material, an aerosol generating component (aerosol generator), an aerosol generating area, a mouthpiece, and/or an area for receiving aerosolisable material.

The present disclosure is concerned with systems in which the aerosol generating component or aerosol generator comprises a heater capable of interacting with the aerosolisable material so as to release one or more volatiles from the aerosolisable material to form an aerosol.

In some embodiments, the article for use with the non-combustible aerosol provision device may comprise aerosolisable material or an area for receiving aerosolisable material. In some embodiments, the article for use with the non-combustible aerosol provision device may comprise a mouthpiece. The area for receiving aerosolisable material may be a storage area for storing aerosolisable material. For example, the storage area may be a reservoir. In some embodiments, the area for receiving aerosolisable material may be separate from, or combined with, an aerosol generating area.

As used herein, the term "component" may be used to refer to a part, section, unit, module, assembly or similar of an electronic cigarette or similar device that incorporates several smaller parts or elements, possibly within an exterior housing or wall. An aerosol provision system such as an electronic cigarette may be formed or built from one or more such components, such as an article and a device, and the components may be removably or separably connectable to one another, or may be permanently joined together during manufacture to define the whole system. The present disclosure is applicable to (but not limited to) systems comprising two components separably connectable to one another and configured, for example, as an article in the form of an aerosolisable material carrying component holding liquid or another aerosolisable material (alternatively referred to as a cartridge, cartomiser or consumable), and a device having a battery or other power source for providing electrical power to operate an aerosol generating component or aerosol generator for creating vapour/aerosol from the aerosolisable material. A component may include more or fewer parts than those included in the examples.

In some examples, the present disclosure relates to aerosol provision systems and components thereof that utilise aerosolisable material in the form of a liquid or a gel which is held in a storage area such as a reservoir, tank, container or other receptacle comprised in the system, or absorbed onto a carrier substrate. An arrangement for delivering the material from the reservoir for the purpose of providing it to an aerosol generator for vapour / aerosol generation is included. The terms "liquid", "gel", "fluid", "source liquid", "source gel", "source fluid" and the like may be used interchangeably with terms such as "aerosol-generating material", "aerosolisable substrate material" and "substrate material" to refer to material that has a form capable of being stored and delivered in accordance with examples of the present disclosure.

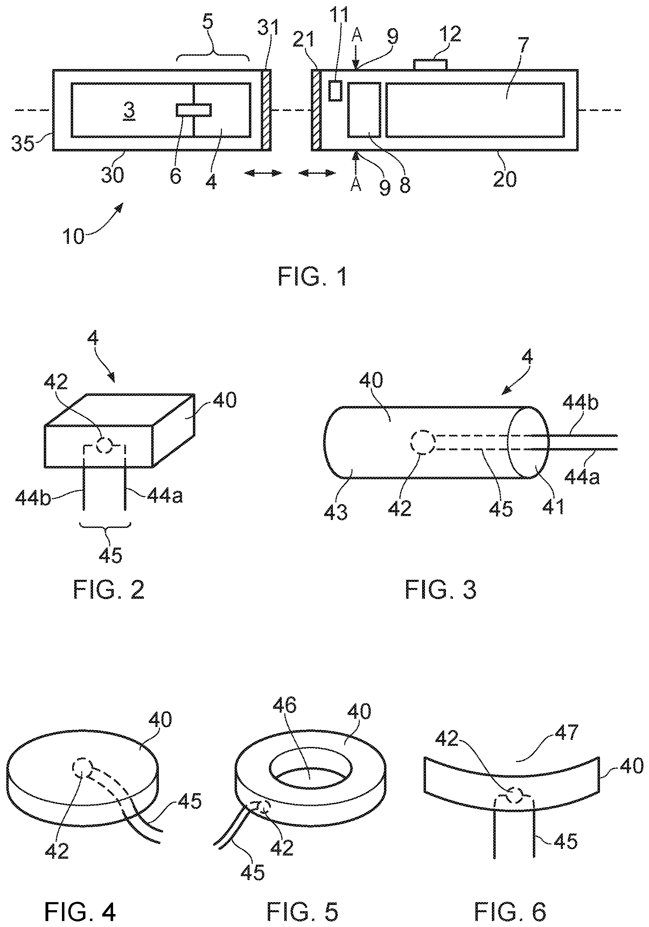

Figure 1 is a highly schematic diagram (not to scale) of a generic example aerosol/vapour provision system such as an e-cigarette 10, presented for the purpose of showing the relationship between the various parts of a typical system and explaining the general principles of operation. Note that the present disclosure is not limited to a system configured in this way, and features may be modified in accordance with the various alternatives and definitions described above and/or apparent to the skilled person. The e-cigarette 10 has a generally elongate shape in this example, extending along a longitudinal axis indicated by a dashed line, and comprises two main components, namely a device 20 (control or power component, section or unit), and an article or consumable 30 (cartridge assembly or section, sometimes referred to as a cartomiser or clearomiser) carrying aerosol-generating material and operating to generate vapour/aerosol.

The article 30 includes a storage area such as a reservoir 3 containing a source liquid or other aerosol-generating material comprising a formulation such as liquid or gel from which an aerosol is to be generated, for example containing nicotine. As an example, the source liquid may comprise around 1 to 3% nicotine and 50% glycerol, with the remainder comprising roughly equal measures of water and propylene glycol, and possibly also comprising other components, such as flavourings. Nicotine-free source liquid may also be used, such as to deliver flavouring. A solid substrate (not illustrated), such as a portion of tobacco or other flavour element through which vapour generated from the liquid is passed, may also be included. The reservoir 3 may have the form of a storage tank, being a container or receptacle in which source liquid can be stored such that the liquid is free to move and flow within the confines of the tank. For a consumable article, the reservoir 3 may be sealed after filling during manufacture so as to be disposable after the source liquid is consumed; otherwise, it may have an inlet port or other opening through which new source liquid can be added by the user. The article 30 also comprises an aerosol generator 5, comprising in this example an aerosol generating component, which in the current context has the form of an electrically powered heating element or heater 4 and an aerosol-generating material transfer component 6. The heater 4 is located externally of the reservoir 3 and is operable to generate the aerosol by vaporisation of the source liquid by heating. The aerosol-generating material transfer component 6 is a transfer or delivery arrangement configured to deliver aerosol-generating material from the reservoir 3 to the heater 4. In some examples, it may have the form of a wick or other porous element. A wick 6 may have one or more parts located inside the reservoir 3, or otherwise be in fluid communication with liquid in the reservoir 3, so as to be able to absorb source liquid and transfer it by wicking or capillary action to other parts of the wick 6 that are adjacent or in contact with the heater 4. This liquid is thereby heated and vaporised, and replacement liquid drawn, via continuous capillary action, from the reservoir 3 for transfer to the heater 4 by the wick 6. The wick may be thought of as a conduit between the reservoir 3 and the heater 4 that delivers or transfers liquid from the reservoir to the heater. In some designs, the heater 4 and the aerosol-generating material transfer component 6 are unitary or monolithic, and formed from a same material that is able to be used for both liquid transfer and heating, such as a material which is both porous and conductive. In still other cases, the aerosol-generating material transfer component may operate other than by capillary action, such as by comprising an arrangement of one or more valves by which liquid may exit the reservoir 3 and be passed onto the heater 4.

A heater and wick (or similar) combination, referred to herein as an aerosol generator 5, may sometimes be termed an atomiser or atomiser assembly, and the reservoir with its source liquid plus the atomiser may be collectively referred to as an aerosol source. Various designs are possible, in which the parts may be differently arranged compared with the highly schematic representation of Figure 1. For example, and as mentioned above, the wick 6 may be an entirely separate element from the heater 4, or the heater 4 may be configured to be porous and able to perform at least part of the wicking function directly (a metallic mesh, for example). In the present context, the system is an electronic system, and the heater 4 comprises one or more electrical heating elements that operate by ohmic/resistive (Joule) heating, although inductive heating may also be used, in which case the heater comprises a susceptor in an induction heating arrangement. A heater of this type could be configured in line with the examples and embodiments described in more detail below. In general, therefore, an atomiser or aerosol generator, in the present context, can be considered as one or more elements that implement the functionality of a vapour-generating element able to generate vapour by heating source liquid (or other aerosol-generating material) delivered to it, and a liquid transport or delivery element able to deliver or transport liquid from a reservoir or similar liquid store to the vapour-generating element by a wicking action / capillary force or otherwise. An aerosol generator is typically housed in an article 30 of an aerosol generating system, as in Figure 1, but in some examples, at least the heater part may be housed in the device 20. Embodiments of the disclosure are applicable to all and any such configurations which are consistent with the examples and description herein.

Returning to Figure 1, the article 30 also includes a mouthpiece or mouthpiece portion 35 having an opening or air outlet through which a user may inhale the aerosol generated by the heater 4.

The device 20 includes a cell or battery 7 (referred to hereinafter as a battery, and which may or may not be re-chargeable) to provide electrical power for electrical components of the e-cigarette 10, in particular to operate the heater 4. Additionally, there is a controller 8 such as a printed circuit board and/or other electronics or circuitry for generally controlling the e-cigarette. The controller may include a processor programmed with software, which may be modifiable by a user of the system. The control electronics/circuitry 8 operates the heater 4 using power from the battery 7 when vapour is required. At this time, the user inhales on the system 10 via the mouthpiece 35, and air A enters through one or more air inlets 9 in the wall of the device 20 (air inlets may alternatively or additionally be located in the article 30). When the heater 4 is operated, it vaporises source liquid delivered from the reservoir 3 by the aerosol-generating material transfer component 6 to generate the aerosol by entrainment of the vapour into the air flowing through the system, and this is then inhaled by the user through the opening in the mouthpiece 35. The aerosol is carried from the aerosol generator 5 to the mouthpiece 35 along one or more air channels (not shown) that connect the air inlets 9 to the aerosol generator 5 to the air outlet when a user inhales on the mouthpiece 35.

More generally, the controller 8 is suitably configured / programmed to control the operation of the aerosol provision system to provide functionality in accordance with embodiments and examples of the disclosure as described further herein, as well as for providing conventional operating functions of the aerosol provision system in line with established techniques for controlling such devices. The controller 8 may be considered to logically comprise various sub-units / circuitry elements associated with different aspects of the aerosol provision system's operation in accordance with the principles described herein and other conventional operating aspects of aerosol provision systems, such as display driving circuitry for systems that may include a user display (such as an screen or indicator lights) and user input detections via one or more user actuable controls. It will be appreciated that the functionality of the controller 8 can be provided in various different ways, for example using one or more suitably programmed programmable computers and/or one or more suitably configured application-specific integrated circuits / circuitry / chips / chipsets configured to provide the desired functionality.

The device 20 and the article 30 are separate connectable parts detachable from one another by separation in a direction parallel to the longitudinal axis, as indicated by the double-headed arrows in Figure 1. The components 20, 30 are joined together when the device 10 is in use by cooperating engagement elements 21, 31 (for example, a screw or bayonet fitting) which provide mechanical and in some cases electrical connectivity between the device 20 and the article 30. Electrical connectivity is required if the heater 4 operates by ohmic heating, so that current can be passed through the heater 4 when it is connected to the battery 5. In systems that use inductive heating, electrical connectivity can be omitted if no parts requiring electrical power are located in the article 30. An inductive work coil can be housed in the device 20 and supplied with power from the battery 5, and the article 30 and the device 20 shaped so that when they are connected, there is an appropriate exposure of the heater 4 to flux generated by the coil for the purpose of generating current flow in the material of the heater. The Figure 1 design is merely an example arrangement, and the various parts and features may be differently distributed between the device 20 and the article 30, and other components and elements may be included. The two sections may connect together end-to-end in a longitudinal configuration as in Figure 1, or in a different configuration such as a parallel, side-by-side arrangement. The system may or may not be generally cylindrical and/or have a generally longitudinal shape. Either or both sections or components may be intended to be disposed of and replaced when exhausted (the reservoir is empty or the battery is flat, for example), or be intended for multiple uses enabled by actions such as refilling the reservoir and recharging the battery. In other examples, the system 10 may be unitary, in that the parts of the device 20 and the article 30 are comprised in a single housing and cannot be separated. Embodiments and examples of the present disclosure are applicable to any of these configurations and other configurations of which the skilled person will be aware.

The act of inhaling on an electronic cigarette or other aerosol provision system in order to obtain a quantity or dose of aerosol for consumption by the user is often referred to as puffing, and a single inhalation act is termed a puff. In order to operate the aerosol provision system to generate aerosol during a puff, the system will include a mechanism or arrangement operable to activate the aerosol generator when aerosol is required. This comprises the activation of the heater by supplying electrical power from the battery to the heater. The provision of electrical power to the heater is under the control of the controller in the device, and can be on the receipt by the controller of signals indicating that a puff is starting and ending.

Two examples of such arrangements are an air-flow sensor and a user-operated switch. Referring to Figure 1, an air-flow sensor 11 may be located inside the device 20 or alternatively inside the article 30. The air-flow sensor is operable to detect the flow of air through the system, from the air inlets 9 to the mouthpiece 35, when the user inhales to achieve a puff. When the air flow sensor 11 detects air-flow (which may require a level above a threshold corresponding to a typical user inhalation force or pressure, for example), a start signal is communicated to the controller 8, and in response, the controller 8 activates the heater 4 by providing it with electrical power from the battery 7, and aerosol is delivered. When the user stops inhaling, the air flow sensor 11 recognises the cessation of air flow, and a corresponding stop signal is communicated to the controller 8, whereupon electrical power supply to the heater 4 is stopped, and aerosol delivery ceases. The time between the start signal and the stop signal can be defined as the puff period, since it broadly corresponds to the time for which the user is inhaling on the system and able to obtain aerosol. Accordingly, an air flow sensor used in this manner is sometimes referred to as a puff detector.

Alternatively, the system may comprise a user-operated switch, or more generally a user actuable control. The control may have the form of a button 12 on the exterior of the housing of the device 20, as shown in Figure 1, although other formats of control may be used as will be apparent to the skilled person. When the user desires a puff, the mouthpiece 35 is placed in the mouth for inhalation of air through the system as before, and the user operates the control 12 using the relevant actuation. In response to the actuation, power is provided from the battery 7 to the heater 4, typically under control of the controller 28, in order to activate the heater and initiate aerosol generation. The user inhales the aerosol (takes a puff) until the desired quantity has been consumed. The user then operates the control 12 further in order to turn off the activation of the heater 4 by which the supply of power is halted. The operation of the control 12 may take any convenient form such that the time between the heater being turned on (activated) and turned off (deactivated) can be defined as the puff period, broadly corresponding to the time for which the user is inhaling on the system and able to obtain aerosol.

Note that a user actuable control may be configured to enable alternative or additional functions of the system, beside heater activation for a puff. Also, a system may include both an air-flow sensor and one or more user actuable controls, where the air-flow sensor is configured for activation of the heater in response to inhalation, and the user actuable control or controls are configured for one or more other functions.

Aerosol provision systems that include a heater may also include a means for measuring a temperature of the heater. The temperature information can be used for various purposes, such as aiding the detection of adverse conditions (for example, overheating if the aerosol-generating material is running out), and to enable temperature feedback to help control the temperature of the heater at a desired target temperature. Temperature feedback is achieved by providing the temperature information to the system's controller, which responds by modifying the power supplied from the heater to battery so as to move the heater operation towards the desired temperature. This might include controlling the heater so as to maintain a constant temperature during a puff, or so as to follow a particular temperature profile over the course of one or more puffs, for example.

Some systems use a separate temperature sensor placed in the vicinity of the heater to obtain temperature measurements. The accuracy of such an arrangement may be fairly poor. For example, a separate temperature sensor may not correctly reflect the temperature of a heater in the form of a wire coil heating element. The configuration of any given aerosol generator may not lend itself to a temperature sensor being able to be located so as to accurately measure the heater temperature, and/or the placement of a temperature sensor close to the aerosol generator may impede the flow of air over, round or past the aerosol generator. Another approach is to measure an electrical resistance for the heater and use this to determine heater temperature by taking account of the variation of resistance with temperature. This can be prone to low sensitivity, however, due to the relatively low temperature coefficient of resistance associated with some materials commonly used for heaters in aerosol provision systems.

Accordingly, it is proposed in embodiments of the present disclosure to configure an aerosol generator to include an electrical heater that comprises ceramic material, with at least one thermocouple integrated into the heater. The thermocouple can be considered to be embedded within the ceramic material. A thermocouple is operable as a simple, accurate and responsive temperature sensor, which unlike some other temperature sensors is effectively self-powered. By embedding the thermocouple within a ceramic heater, the thermocouple is placed in direct contact with the material of the heater, namely the component which is delivering heat energy to vaporise the aerosol-generating material. Hence it is possible to obtain temperature information that accurately indicates and reflects the actual temperature of the heater, in other words the temperature at which the heater is operating in order to cause vaporisation of the aerosol-generating material. Also, positioning the thermocouple integrally within the heater places it out of the air flow through the aerosol provision system. The flow of air is hence unimpeded by the presence of any temperature sensor, and the thermocouple is sheltered from any cooling effect from the passing air which might make the measured temperature correspond poorly to that of the heater.

A thermocouple comprises a pair of electrical conductors (typically lengths of wire) which are joined together (such as by welding) to form an electrical junction. The conductors are formed from different materials, specifically materials have different Seebeck coefficients. As is well-known, the temperature at the thermocouple junction generates a voltage across the two non-joined ends of the conductors owing to the flow of a thermoelectric current, where the voltage is dependent on the junction temperature. Accordingly, measurement of this voltage can be used to determine the temperature at the junction. In summary, a thermocouple acts to provide a temperature dependent voltage via the thermoelectric effect.

In the present context, therefore, the aerosol provision system may thus include control circuitry comprising conventional thermocouple measurement circuitry (for example incorporating a suitable "cold" thermocouple junction, that is, a junction not located in or at the aerosol generator, in order to act as a reference junction) to allow the temperature of the electric heater to be determined from voltage measurements obtained from the thermocouple integrated into the heater. In this way, the temperature of the heater in use can be sensed, by way of the controller in the device incorporating thermocouple measurement circuitry, including a suitable cold junction, and being configured to determine a temperature measurement for the thermocouple (relative to the cold junction) based on a measured voltage arising from the difference in temperature between the cold junction in the controller and the heated thermocouple in the heater, as a result of the thermoelectric effect. The thermocouple measurement circuitry may be based on broadly conventional circuitry for deriving a temperature of a thermocouple junction.

Any suitable conductive materials can be used to form the thermocouple, including material pairings conventional in thermocouple design. For example, the two conductors may comprise different nickel alloys. One conductor may comprise an alloy of nickel and chromium and the other conductor may comprise an alloy of nickel, aluminium, manganese and silicon. Example alloys are approximately 90% nickel and 10% chromium (which may be referred to as chromel), and approximately 95% nickel, 2% aluminium, 2% manganese and 1% silicon (which may be referred to as alumel). Use of these alloys gives a thermocouple design generally known as a Type-K thermocouple junction, which is a common general purpose thermocouple. Type-K thermocouples are inexpensive and commercially available for operation optimised at a variety of different temperatures within a wide range. However, the disclosure is not limited in this regard, and other thermocouple configurations may be used. Thermocouples are known having different measurement accuracies and for operation over different temperature ranges so can be selected for use in the current context according to the nature of the heater operating temperature and control which is desired. Other examples which may be used include a Type E thermocouple junction (formed from chromel and constantan), a Type J thermocouple junction (formed from iron and constantan), a Type M thermocouple junction (formed from alloys of nickel with molybdenum and nickel with cobalt), a Type N thermocouple junction (formed from Nicrosil and Nisil), a Type T thermocouple junction (formed from copper and constantan); a Type B, Type R or Type S thermocouple junction (formed from various combinations of platinum and platinum/rhodium alloys), a Type C, a Type D or a Type G thermocouple junction (formed from various combinations of tungsten and tungsten/rhenium alloys), or indeed a non-standard thermocouple junction comprising any combination of materials having different Seebeck coefficients.

As noted above, the thermocouple is embedded in ceramic material from which the electrical heater is comprised. By "embedded", it is meant that the ceramic material covers, surrounds and is in contact with substantially all the outer surface of the thermocouple junction (subject to gaps where any pores in the ceramic material are immediately adjacent to the thermocouple). The thermocouple junction is wholly enveloped in the ceramic material, and can hence be considered to be integrated into, or integral with, the heater. The thermocouple and the heater form a monolithic structure. Hence, there is close contact between the ceramic material and the thermocouple junction, and the thermocouple is isolated from the environment around the heater. In this way, the thermocouple can attain a same or similar temperature to the heater, and measurements obtained from the thermocouple better reflect the actual temperature of the heater.

The ceramic material can be any of a variety of types, which allows the concept proposed herein to offer great flexibility in the design of the aerosol generator in which the heater is comprised. Ceramic materials can be formed into a wide range of shapes and sizes, and are available in both porous and non-porous forms, and both conductive and nonconductive forms. These various features can be utilised in many different combinations in order to produce an aerosol generator.

Figure 2 shows a perspective view of a first example of a ceramic heater with an embedded thermocouple. The heater 4 has a very simple format in this example, and comprises a heater body 40 in the form of a rectangular block of ceramic material 40, in which a thermocouple 45 is embedded, at a location roughly central within the ceramic heater body 40. By this is meant that the junction 42 of the thermocouple 45 is at an approximately central position within the three dimensions of the ceramic body 40. The thermocouple 45 comprises the conventional two conductors 44a, 44b across which the thermoelectric voltage arises, representative of the temperature of the junction 42. The conductors 44a, 44b extend from the junction 42 within the ceramic body 40, through the ceramic material and out to the exterior where they can be connected to a suitable thermocouple measurement circuit as described above. Options for electrical connectivity of the heater 4 will be discussed in more detail below, together with arrangements for configuring the heater 4 as part of an aerosol generator.

The body 40 of the heater 4, comprised of ceramic material, can be formed into any shape as required, according to known methods of shaping and forming ceramics such as moulding and sintering. This enables many designs of aerosol generator to be embodied, and also allows the heater 4 to be formatted with reference to other desired elements within an aerosol provision system so that form of any such elements can dominate the overall design if desired.

Figure 3 shows a perspective view of a second example of a ceramic heater. In this case, the heater 4 is configured as a cylinder, comprising a cylindrical heater body 40 formed from ceramic material, in which a thermocouple 45 is embedded as before. The junction 42 of the thermocouple 45 is positioned roughly centrally within the heater body 40, as in the previous example. The two conductors 44a, 44b are arranged so as to protrude from the heater body through one of circular end faces 41. For the purposes of electrical connection to the measurement circuit, an arrangement in which the conductors 44a, 44b are adjacent may be convenient. Other arrangements may be preferred in some circumstances, for example a symmetrical arrangement in which the conductors 44a, 44b extend from the junction 42 in opposite directions along the longitudinal axis of the cylindrical body 40 so as to protrude from opposite end faces 41. Any other arrangement may also be used, such as one or both conductors passing through the curved side wall 43 of the heater body 40. This is true of any shape or format of the heater body; the thermocouple conductors can lead out from the heater body at any desired positon, either adjacently in a same face of the body, or spaced apart on one or more faces. Prisms of other shapes may also be used instead of the illustrated cylinder; the heater body may comprise a prism with a transverse cross-section of any shape, such as oval, square, hexagon, triangle, or other regular or irregular shapes. The cross-sectional size and or shape may be constant along the length of the prism, or may vary.

Figure 4 shows a perspective view of a third example of a ceramic heater 4, in which the heater body 40 comprises a substantially planar disc of ceramic material.

Figure 5 shows a perspective view of a fourth example of a ceramic heater 4, in which the heater body comprises ceramic material in the shape of a ring, with a central aperture or hole 46. A configuration of this type (where the format of the heater body 40 need not be circular but may have other inner and outer shapes around an aperture) might be arranged such that airflow within the aerosol provision system passes through the aperture, for example. The interface between the flowing air and the heater is thereby distributed around the airflow to pass vapour more evenly into the air, and the presence of the heater does not impede the airflow. In examples lacking a central aperture, however, the presence of the heater in the pathway of the airflow may be desired for introducing turbulence, for example.

Figure 6 shows a cross-sectional view through a fifth example of a ceramic heater 4. In this example, the heater body 40 has a dished shape, with an indent or concavity 47 on one surface. This may be useful for retaining aerosol generating material on the surface of the heater body 40 pending vaporisation, for example. Other body shapes with a similar recess may also be used.

From the foregoing, it should be appreciated that the ceramic heater body may take any size and shape according to preference and reference to the remainder of the aerosol provision system. The disclosure is not limited in this regard.

In some examples, a separate aerosol-generating material transfer component (referred to for simplicity as a wick hereinafter) may be provided in conjunction with the heater body in order to enable aerosol generation. The wick comprises a portion of material with some porosity and/or capillary structure which is able to absorb aerosol-generating material from an aerosol generating material storage area, for example by protruding through one or more openings in the wall of the storage area, and carry it by wicking or capillary action through the porous or capillary structure to the vicinity of the heater for vaporisation. The wick is generally placed in contact with a surface of the heater body, or in sufficiently close proximity that the material in the wick is exposed to heat energy output by the heater so that it is heated to the point of vaporisation. In other examples, the wick may deliver aerosol-generating material onto or near to the heater in a free form, such as by dispensing liquid drops onto the heater surface.

These and other types of wick which will be apparent to the skilled person may comprise any of a range of materials having suitable pores or capillary channels. Examples include wicks formed from fibres, such as cotton fibres, glass fibres, or metallic fibres, the fibres being formed into a bundle, a rope or thread, a woven or nonwoven fabric or mesh, or other format. Other wicks may be formed from an element having one or more fine capillary channels within it or on its surface which can take up and circulate fluid by capillary action. Any of these or other wick types may be used in conjunction with a ceramic heater having an embedded thermocouple as disclosed herein.

A wick is of particular use in forming an aerosol generator when the ceramic heater is made from ceramic material with low or no porosity. Such a material will be referred to as a non-porous ceramic material herein; this term is used to indicate a ceramic material with little or no ability to absorb the aerosol-generating material. In particular, a non-porous ceramic material is considered to be a material which is not suitable for transporting aerosol-generating material from a storage area to enable it to be vaporised by the heater. The ceramic material is unable to carry the aerosol-generating material in this way, or is unable to deliver it at a suitable rate to feed the vaporisation process. This threshold of porosity below which a ceramic material might be deemed non-porous may therefore vary according to the properties of the aerosol-generating material; ability to wick a fluid or carry it by capillary action can depend on the viscosity of the fluid.

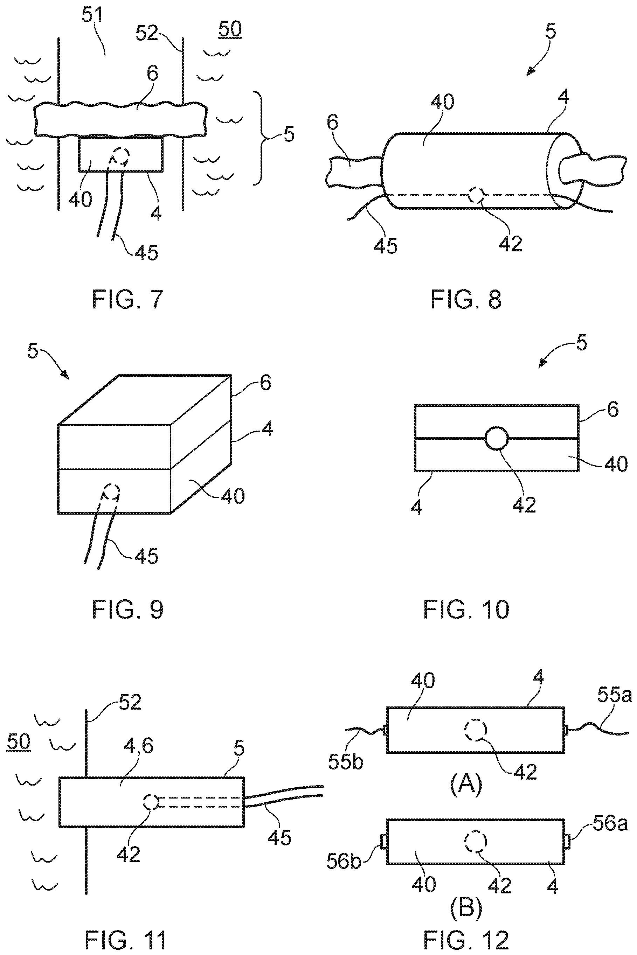

Figure 7 shows a schematic side view of an example aerosol generator comprising a separate wick component, installed for use within an aerosol provision system, such as within a cartomiser or consumable part of such a system. An aerosol-generating material storage area 50 such as a reservoir has an annular shape with a central open passage 51 for air flow through the system. The aerosol generator is located with the passage 51, and comprises an electric heater 4 formed from a ceramic body 40 and having an embedded thermocouple 45, and a wick 6 such as a bundle of fibres or wadding in contact with a surface of the ceramic body 40 and having an elongate shape with ends that extend through oppositely-located apertures in an inner wall of the reservoir 50 so as to be able to absorb aerosol-generating material from the reservoir 50. For simplicity the heater 4 is depicted as a simple block, but may have any of the shapes or formats described herein or others which will be readily apparent.

Figure 8 shows a perspective side view of a further example aerosol generator 5 with a separate wick component. The heater 4 comprises a tubular portion of ceramic material 40, with an embedded thermocouple 45, the junction 42 of which is placed about midway along the length of the ceramic body 40. A porous wick 6, comprising a bundle or rope of cotton or glass fibres for example, extends through the central hole of the tubular ceramic body 40 and protrudes from each end. The opposite ends of the wick can reach into opposite sides of an annular reservoir as in the Figure 7 example. Vapour will be formed at the interface between the ceramic material and the wick, that is, at the inner surface of the tube. The vapour may be able to escape through the end holes of the tube, and/or the tube may include perforations in its side wall (not shown) that allow the vapour to escape for entrainment in the airflow through the aerosol provision system.

Ceramic material is also available in porous forms, in contrast to the non-porous types discussed above. Porosity is provided by a network of pores or other interstices throughout the ceramic material, that allow it to absorb and wick fluids. In the current context, a porous ceramic is one which is able to absorb aerosol-generating material at a level such that it is suitable for providing the required aerosol-generating material transportation function, to carry aerosol-generating material from a reservoir or other storage area to the heater for vaporisation.

A porous ceramic material is therefore proposed for use as an aerosol-generating material transfer component in an aerosol generator as disclosed herein. This may be achieved in different ways. In a first approach, a non-porous ceramic material is used for the heater, as in the examples of Figures 7 and 8, but the wick is formed from porous ceramic instead of the fibre-based material mentioned thus far. In a second approach, porous ceramic is used for both wicking and heating; this allows both the wick and the heater to be embodied by a single portion of ceramic material.

Figure 9 shows a perspective view of a simple example aerosol generator configured in this way. The aerosol generator 5 comprises a first portion of non-porous ceramic material configured as the heater body 40 of the heater 4, and a second portion of porous ceramic material configured at the aerosol-generating material transfer component 6. The two ceramic portions are bonded together at adjacent planar surfaces to form a composite structure, that effectively comprises two layers of different ceramic materials. The heater 4 and the aerosol-generating material transfer component can be considered as being a unitary or monolithic ceramic structure. The thermocouple 45 is embedded in the non-porous ceramic body 40 of the heater 4. For simplicity, both ceramic portions are shown as simple rectangular or square blocks of the same size, but this need not be the case. Either portion may be shaped as desired, for example in accordance with any of the earlier examples. The two portions may be differently shaped from one another. For example, the aerosol-generating material transfer component 6 may have one or more protruding parts that extend beyond boundaries of the heater 4 in order to reach into an aerosol-generating material storage area, such as in the examples of Figures 7 or 8. In other examples, the two ceramic portions need not be planar. They could be arranged coaxially, with one portion shaped as a tube and the other portion shaped as a rod that fits closely within the central bore of the tube. Either portion could be either the rod or the tube.

The thermocouple 45 is embedded in the non-porous ceramic portion, namely the heater 4, in the example of Figure 9. This may provide a more accurate indication of the heater temperature.

Figure 10 shows a cross-sectional view of a second simple example aerosol generator configured from two portions of ceramic material. As in the previous example, the aerosol generator 5 has a composite or laminate structure comprising a non-porous ceramic portion operable as the heater 4 bonded to a porous ceramic portion operable as the aerosol-generating material transfer component 5. In this example, however, the thermocouple junction 42 is embedded in the ceramic material at the boundary between the porous ceramic and the non porous ceramic. This may enable simpler manufacturing, for example the two ceramic portions may be formed with shaped cavities in their facing surfaces to house the thermocouple, and then bonded together around the thermocouple. From the perspective of temperature measurement, it may be suitable in some heater control configurations to acquire the temperature at the surface of the heater adjacent to the wick, where the vaporisation occurs, rather than the core temperature of the heater.

A composite or otherwise two-part unitary all-ceramic aerosol generator such as shown in Figures 9 and 10 may be fabricated by pre-forming the two ceramic portions and then bonding them together at the appropriate facing surfaces using adhesive, cement or other bonding material, for example. The bonding material should be chosen so as not to inhibit the vaporisation process, and may be applied over all of the contacting facing surfaces, or just part of these surfaces. In some cases, bonding may not be required. For example, in a tube-and-rod configuration the rod may be held inside the tube by friction, or the surrounding structure of the assembled aerosol provision system may hold the two portions in the required spatial relationship.

In another example, the two ceramic parts may be made unitary by shaping both parts from suitable ceramic powders as two layers one above the other, and then sintering the whole structure together so the two layers solidify together with the rest of the structure.

Other fabrication techniques will be apparent to the skilled person and are not excluded.

Where a porous ceramic is employed, it may be used to embody the heater as well as the aerosol-generating material transfer component. In other words, the aerosol generator has a unitary structure formed from a single type of ceramic material where the ceramic material is porous (alternatively, a composite structure of two different porous ceramics could be used).

Figure 11 shows a simplified schematic representation of an example aerosol generator with a unitary configuration. A single porous ceramic body is provided as the aerosol generator 5, which is operable as the heater, and has a thermocouple embedded within it. The ceramic body has a rod shape, and one end passes through an aperture in a wall 52 of a reservoir 50 in order to allow the porous ceramic to absorb aerosol-generating material from the reservoir 50 and transfer it along the ceramic body where it is heated for vaporisation. In order to reduce heating of aerosol-generating material still held in the reservoir 50, the heating functionality of the ceramic body may be configured such that heat production is concentrated in a part or parts of the ceramic body spaced apart from the reservoir.

A unitary aerosol generator formed wholly from porous ceramic may be shaped and configured otherwise than the example of Figure 11, for example in accordance with shapes and configurations discussed elsewhere in the disclosure.

Any of the example arrangements mentioned above can be configured for operation of the ceramic heater in either of two main ways (although other approaches apparent to the skilled person are not excluded). Ceramic material exists in forms which are electrically conductive, and in forms which are electrically insulating. In the former case, the ceramic body that forms the heater of the aerosol generator can act directly as an electrically resistive heater if the ceramic body is provided with electrical contacts. An example of a conductive ceramic material suitable for this purpose is silicon carbide. In the latter case, an electrically resistive element can be deployed on or in the ceramic body to emit thermal energy via Joule heating, which is transferred to the ceramic material, causing a temperature rise in the ceramic body so that it can act as a heater to vaporise aerosol-generating material.

Figure 12(A) shows a side view of a simple example heater 4 fabricated from conductive ceramic material. Although depicted as a heater body 40 with a simple rectangular block shape, the heater 4 can have any shape, in accordance with the above description. A thermocouple is embedded in the ceramic material as before, with the junction located at or near the centre of the heater. In order for the ceramic body 40 to be operable as a resistive heater, in other words to allow electrical current from the aerosol provision system's battery to be passed through it, the ceramic body is provided with a pair of electrical contacts. In this example these comprise electrical wires or leads 55a, 55b coupled to opposite surface of the ceramic body, for example by soldering. The wire or leads 55a, 55b can be connected as required within the electronic aerosol provision system when the aerosol generator comprising the heater 4 is installed therein. While in this example the electrical contacts are shown located at opposite ends of the ceramic body 40 so that current will flow along the length of the ceramic body and allow roughly uniform heating over that length, this is not necessary. The electrical contacts can be situated in other spatial relationships to one another to define other current paths and hence give other heating patterns. For example the contacts could be located so that current flow and hence heat generation is confined towards one end only of the ceramic body. This could be applicable to the example of Figure 11, where it could be appropriate to keep large temperature rises away from the bulk of the aerosol-generating material in the reservoir.

Figure 12(B) shows a side view of an alternative example heater 4 formed from conductive ceramic material. Again depicted as a block-shaped ceramic body 40 with an embedded thermocouple junction 42 and electrical contacts located at opposite ends of the ceramic body 40, in this example the contacts 56a, 56b comprise surface contacts, without wires or leads. This configuration allows the heater 4 to be installed by inserting it into a socket arrangement with corresponding surface contacts connected to the electrical circuitry in the aerosol provision system, for example similar to the installation of a AA or AAA sized battery in a consumer electrical item.

If the ceramic material selected for the heater is an electrical insulator, or has an inappropriate electrical conductivity/resistivity to allow it to operate directly as a resistive heater, the ceramic body can be provided with one or more electrical heating elements through which electrical current can be passed by connecting the heater to a battery in the aerosol provision system.

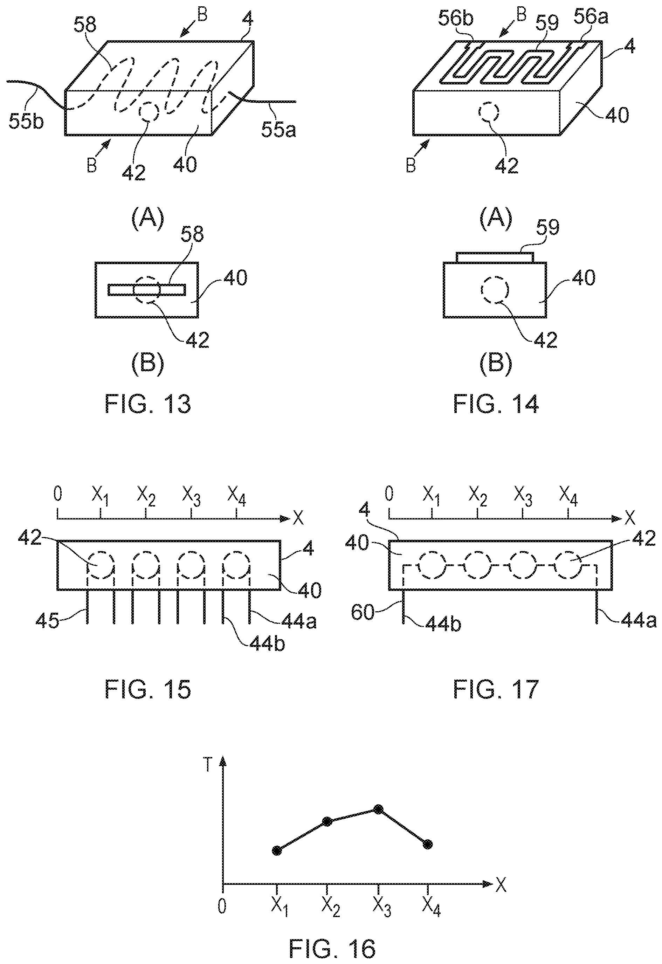

Figure 13(A) shows a perspective view of a first example ceramic heater formed from insulating ceramic material. Again, the heater 4 is depicted as a simple block; this is for the purposes of example only and any other shape for the ceramic body 40 may be used as discussed. In this example, a heating element is embodied as a conductive metallic wire 58, formed into a serpentine shape and embedded within the ceramic body 40, along with the thermocouple junction 42. The ends of the metallic wire 58 extend outwardly from the ceramic body 40 to provide electrical contact leads 55a, 55b, as in the Figure 12(A) example. The contact leads 55a, 55b may part of the heating element wire 58 or may be separate conductors connected to the ends of the heating element wire 58. Also, the heating element wire 58 may be shaped otherwise than the depicted serpentine example.

Figure 13(B) shows a cross-sectional view through the heater 4 of Figure 13(A) along the line B-B. The heating element wire 58 is embedded centrally within the thickness of the ceramic body, at a same level as the thermocouple junction 42. This should provide roughly equal heating for both the upper and lower surfaces of the heater 4. However, the heating wire may be positioned at other depths or at other positions in order to provide a greater heating effect at one or more parts of the heater 4.

A heater of the this type may be fabricated by arranging powdered ceramic material into the desired shape around the heating element wire and the thermocouple, and sintering it, or by sandwiching the heating element wire and thermocouple between two portions of the ceramic material and bonding them together. In the latter case, the heating element may instead comprise a conductive trace deposited onto a surface of one of the ceramic portions, using any known fabrication technique such as lithography. A conductive trace may also be used to provide a heating element on an external surface of the ceramic heater.

Figure 14(a) shows a perspective view of a second example ceramic heater formed from insulating ceramic material. Again, the heater 4 is depicted as a simple block; this is for the purposes of example only and any other shape for the ceramic body 40 may be used as discussed. In this example, the heating element is embodied as a conductive metallic trace 59 formed on the upper surface of the ceramic body 40, within which the thermocouple junction is embedded as before. The metallic trace 59 terminates at two ends which comprise surface contacts 56a, 56b. These can be connected to electrical contact wires by soldering, or aligned with other contacts in an installation socket in the aerosol provision system. The conductive trace 59 can have shapes other than the depicted serpentine shape.

Figure 14(B) shows a cross-sectional view through the heater 4 of Figure 14(A), along the line B-B. The surface position of the heating trace 59 can be appreciated, located above the embedded thermocouple.

In other examples, more than one heating element may be included, for example to provide more uniform heat distribution throughout the heater 4, or to shape a particular heating pattern. Hence the heater may comprise one or more heating element wires, one or more heating element conductive traces, or some combination of the two types of heating element.

In many circumstances, the thermocouple junction may usefully be embedded in the ceramic material at a roughly central position within the ceramic body. In other words, the junction is located at a midpoint along the various external dimensions of the ceramic body, such as length, width and thickness for a rectangular block, or diameter and thickness for a disc. Some shapes of ceramic body may preclude this however, such as tubular and ring shapes, where the central location with respect to the external dimensions lies in free space. In other instances, a non-central position may be more appropriate for other reasons. For example, an aerosol generator such as the example shown in Figure 11 comprising a porous ceramic body acting as both heater and wick may have its heating capability focussed towards one end or side of the ceramic body as discussed, in which case, the thermocouple may be situated in or towards the volume of the ceramic body where the heating effect is more concentrated. It may or may not be centrally located within the heated volume.

In all these arrangements, the thermocouple delivers a voltage from which temperature can be determined, where the determined temperature indicates the temperature of the heater at the location of the thermocouple junction. Hence, temperature data at a point inside the heater is measured. Single point measurements are adequate for many situations, for example if the design of the heater and its heating functionality are such that heat production is fairly uniform throughout the heater so that a measurement at one point gives a reliable indication of the heater temperature overall. In some cases, it will be suitable to obtain a temperature measurement representing a probable maximum temperature of the heater. For this, the thermocouple junction can be situated at a location which is known, for the design of the heater in question, to correspond to the hottest place, or one of the hottest places, within the heater. Often, this will be a roughly central location, as discussed above. Temperature measurements from the hottest part of the heater can enable suitable control of the heater via feedback based on the temperature measurements. They are also suitable for arrangements in which the temperature measurement is used for safety purposes, such as detecting overheating of the heater. If the measured temperature is the maximum temperature, this provides a useful result to test against a threshold temperature for overheating, since other parts of the heater will not have exceeded a safe maximum temperature undetected. Electrical power to the heater can then be terminated, or other safety measures implemented.

For other applications, it may be useful to obtain temperature measurements at more than one position within the ceramic body of the heater. This may be achieved by various options.

Figure 15 shows a schematic side view of a first example of a heater configured to provide temperature data from multiple locations. The ceramic body 40 of the heater 4 is shown as a simple block for the purpose of illustration only; any shape can be used as discussed. Four individual thermocouples 45 are embedded in the ceramic body 40, with their junctions 42 at spaced apart locations x1 - x4 along a direction x defined along the ceramic body 40. Each thermocouple 45 is distinct from the others and generates its own temperature-dependent voltage indicative of the temperature at the corresponding x location. Hence, four pairs of conductors 44a, 44b protrude from the ceramic body 40 for connection to the temperature measurement circuitry.

The circuitry/controller of the aerosol provision system is configured to derive or determine a temperature corresponding to each of the thermocouple locations x1 - x4. This data can be used to produce a spatial temperature profile, being a graph or map of temperature with respect to position, through the ceramic body.

Figure 16 shows a graph of an example temperature profile such as could be obtained from the arrangement of multiple thermocouples in the Figure 15 example heater. Temperature T is plotted for each measurement position along the x direction. In the example, operation of the heater produces a higher temperature in the central region, so the temperature T derived from the two inner thermocouples at x2 and x3 is higher than the temperature at the outer thermocouples located at x1 and x4.

Multiple (two or more) thermocouple junctions can be provided with any spatial distribution through the ceramic heater. Junctions may be positioned spaced apart along a single line to give a one-dimensional distribution, or within a plane to give a two-dimensional distribution, or distributed over three dimensions. Any distribution can be at regularly or irregularly spaced intervals, depending on the temperature information which it is desired to obtain. Any number of thermocouples can be included; the depicted four thermocouples in Figure 15 is an example only. In general, the temperature mapping obtainable from multiple temperature measurement points can be used for heater control, and for identifying any point of localised overheating.

The more detailed temperature information obtainable in this way can allow more complex temperature control of the heater and hence of the aerosol generation. For example, in the case of a ceramic heater with multiple heating elements, these could be controlled individually or in groups based on multiple spatial temperature measurements. Operation of a resistive heater over its spatial extent can be monitored to allow more detailed fault identification. Other applications for temperature profiles will be readily apparent.

Figure 17 shows a schematic side view of a second example of a heater configured with more than one thermocouple junction. The heater 4 comprises a ceramic block as before, which has embedded within it four thermocouples configured as a thermopile 60. A thermopile 60 is a device that comprises two or more thermocouple junctions 42 electrically connected in series (as shown) or more unusually in parallel. Hence, despite the inclusion of multiple junctions 42 within the ceramic body, there are just two conductors 44a, 44b protruding from the ceramic body 40. Hence, electrical connectivity of the heater 4 is simplified compared to the multiple thermocouple example of Figure 15, which includes a conductor pair for each junction. A thermopile functions by generating a voltage which is proportional to or representative of a temperature gradient or temperature difference across the area occupied by the thermocouple junctions. Hence, a thermopile configuration of the thermocouples in the heater could be used to identify any variations in heat generation across the heater, for example for the purpose of fault detection if a previously uniformly functioning heater develops a non-uniform output. The temperature gradient date derivable from the thermopile is another form of temperature profile discussed with respect to Figure 16, and can be used in at least some of the same ways to control the heater operation.

The various options set out above for enabling the heating and wicking functionalities and providing thermocouple temperature measurement can be used in any combination, and are not limited to the specific examples described in detail. For example, any of the alternative configurations for resistive heating (wire heating element, conductive trace heating element, conductive ceramic material) can be embodied in porous ceramic acting as a wick or with an external wick, or in non-porous ceramic with an external wick, or in a composite structure of porous and non-porous ceramics.

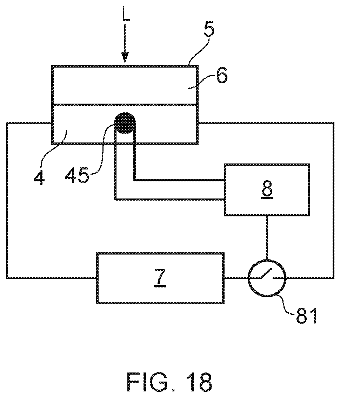

Figure 18 shows a circuit diagram of a simple implementation of temperature measurement-based heater control in an aerosol provision system. An aerosol generator 5 is a simple example in accordance with the present disclosure and comprises an electrical heater 4 comprising ceramic material in conjunction with an aerosol-generating material transfer component 5 that collects aerosol-generating material such as a liquid L from a storage area (not shown) and delivers it to the heater 4 to be vaporised. A thermocouple 45 is embedded in the ceramic material and generates a voltage representative of the temperature at the thermocouple location within the heater via the thermoelectric effect. A battery 7 is connected across the heater 4 for the purpose of providing electrical power to the heater 4, to create a temperature rise to heat the aerosol-generating material. The provision of the power from the battery 7 to the heater 4 is controlled by a controller 8 which is programmed to operated a switch 81 configured to connect and disconnect the battery 7 and the heater 4. The connection and disconnection may be in response to detection of a user operation of an activation control on the system, or the detection of a puff by a puff sensor, for example. In reality, the control of the power provision may be more complex that a simple on/off control, and the controller will be operable to modify the power level in accordance with various patterns of power provision intended to optimise vapour generation or provide a vapour level in line with a user selection.

A way in which the power provision can be controlled is in response to measurements of temperature of the heater. Hence, the thermocouple 45 is connected to suitable thermocouple circuitry in the controller or associated with the controller, such that the controller is able to determine, from the voltage produced by the thermocouple, a value of temperature for the heater. The temperature can be monitored continuously, sampled at intervals, or individual measurements made as required, for example. This temperature data is then used by the controller in a control procedure, such as a feedback arrangement in which the measured temperature is compared to a required temperature for the heater, and the level of power provided to the heater then adjusted up or down depending on whether the measured temperature is too low or too high.

Additionally or alternatively, the measured temperature can be compared to a threshold value for an acceptable maximum temperature. If the comparison indicates that the heater temperature exceeds the threshold, it is considered that the heater has overheated, and the controller can act to disconnect the heater from the battery so that no further power is provided.

Other approaches for controlling operation of the heater based on temperature measurements obtained using the thermocouple will be apparent to the skilled person, and can be implemented as desired. One technique for controlling the level of power provided from a battery to a heater is known as pulse width modulation (PWM), in which power is provided as a sequence of "on" and "off" periods or pulses, the durations or widths of which are described by a duty cycle, which can be modulated to change the total amount of power. An example of aerosol provision system operation using thermocouple temperature measurements to control PWM so as to obtain a desired heater temperature can be found in UK patent application GB201910045.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein.

## Claims

1. An aerosol generator (5) for an electronic aerosol provision system (10), comprising:
an electrical heater (4) comprising ceramic material;
an aerosol-generating material transfer component (6) for delivering aerosol-generating material from an aerosol-generating material storage area (50) to the electrical heater for heating to generate aerosol; and **characterised by**
a thermocouple (45) embedded in the ceramic material such that a junction of the thermocouple is in contact with the ceramic material, and operable to provide a temperature-dependent voltage via the thermoelectric effect from which a temperature of the electrical heater can be determined.

2. An aerosol generator according to claim 1, in which the ceramic material is non-porous.

3. An aerosol generator according to claim 1, in which the ceramic material is porous.

4. An aerosol generator according to claim 3, in which the ceramic material is porous and embodies both the aerosol generating transfer component and the electrical heater.

5. An aerosol generator according to claim 1, in which the ceramic material has a composite structure comprising a first portion (40) formed from non-porous ceramic material bonded to a second portion (6) formed from porous ceramic material, in which the thermocouple is embedded in the first portion, and in which the aerosol-generating material transfer component comprises the second portion.

6. An aerosol generator according to any one of claims 1 to 5, in which the electrical heater comprises an electrically conductive heating element (58; 59) embedded in or formed on the surface of the ceramic material, the ceramic material being electrically insulating.

7. An aerosol generator according to any one of claims 1 to 5, in which the ceramic material is an electrically conductive ceramic material provided with electrical contacts (56a, 56b) in order to be operable as a heating element.

8. An aerosol generator according to any one of claims 1 to 7, in which the thermocouple is embedded in the ceramic such that the junction (42) of the thermocouple is located at or near a midpoint between electrical contacts of the electrical heater.

9. An aerosol generator according to any one of claims 1 to 8, further comprising one or more additional thermocouples, the thermocouples embedded in the ceramic material such that junctions of the thermocouples are at different locations.

10. An aerosol generator according to any one of claims 1 to 8, in which the thermocouple comprises a thermopile (60), the thermopile comprising two or more thermocouple junctions embedded in the ceramic material at different locations.

11. A consumable (30) for an electronic aerosol provision system (10) comprising an aerosol generator according to any one of claims 1 to 10 and an aerosol-generating material storage area (50) for storing aerosol generating material.

12. An electronic aerosol provision system (10) comprising an aerosol generator according to any one of claims 1 to 10, and a controller (8) configured to determine a temperature of the electrical heater from the temperature-dependent voltage provided by the thermocouple.

13. An electronic aerosol provision system (10) comprising an aerosol generator (5) according to claim 9 or claim 10, and a controller (8) configured to determine a temperature profile of the electrical heater from one or more temperature-dependent voltages provided by the thermocouples or the thermopile.

14. An electronic aerosol provision system according to claim 12 or claim 13, in which the controller determines the temperature or temperature profile continuously.

15. An electronic aerosol provision system according to claim 12, 13, or 14, in which the controller is further configured to control operation of the electrical heater in response to the determined temperature or temperature profile.

## Patentansprüche

1. Aerosolerzeuger (5) für ein elektronisches Aerosolbereitstellungssystem (10), umfassend:
eine elektrische Heizvorrichtung (4), die Keramikmaterial umfasst;
eine Übertragungskomponente für aerosolerzeugendes Material (6) zum Zuführen von aerosolerzeugendem Material von einem Lagerbereich für aerosolerzeugendes Material (50) zu der elektrischen Heizvorrichtung zur Erhitzung, um Aerosol zu erzeugen; und **gekennzeichnet durch** ein Thermoelement (45), das in das Keramikmaterial eingebettet ist, so dass ein Übergang des Thermoelements mit dem Keramikmaterial in Kontakt steht, und betreibbar ist, um über den thermoelektrischen Effekt eine temperaturabhängige Spannung bereitzustellen, aus der eine Temperatur der elektrischen Heizvorrichtung bestimmt werden kann.

2. Aerosolerzeuger nach Anspruch 1, wobei das Keramikmaterial nicht porös ist.

3. Aerosolerzeuger nach Anspruch 1, wobei das Keramikmaterial porös ist.

4. Aerosolerzeuger nach Anspruch 3, wobei das Keramikmaterial porös ist und sowohl die aerosolerzeugende Übertragungskomponente als auch die elektrische Heizvorrichtung verkörpert.

5. Aerosolerzeuger nach Anspruch 1, wobei das Keramikmaterial eine Verbundstruktur aufweist, die einen ersten Abschnitt (40) umfasst, der aus nicht porösem Keramikmaterial gebildet ist, das an einen zweiten Abschnitt (6) gebunden ist, der aus porösem Keramikmaterial gebildet ist, wobei das Thermoelement in den ersten Abschnitt eingebettet ist und wobei die Übertragungskomponente für aerosolerzeugendes Material den zweiten Abschnitt umfasst.

6. Aerosolerzeuger nach einem der Ansprüche 1 bis 5, wobei die elektrische Heizvorrichtung ein elektrisch leitfähiges Heizelement (58; 59) umfasst, das in das Keramikmaterial eingebettet oder auf der Oberfläche des Keramikmaterials ausgebildet ist, wobei das Keramikmaterial elektrisch isolierend ist.

7. Aerosolerzeuger nach einem der Ansprüche 1 bis 5, wobei das Keramikmaterial ein elektrisch leitfähiges Keramikmaterial ist, das mit elektrischen Kontakten (56a, 56b) versehen ist, um als Heizelement betreibbar zu sein.

8. Aerosolerzeuger nach einem der Ansprüche 1 bis 7, wobei das Thermoelement so in die Keramik eingebettet ist, dass sich der Übergang (42) des Thermoelements an oder nahe einem Mittelpunkt zwischen elektrischen Kontakten der elektrischen Heizvorrichtung befindet.

9. Aerosolerzeuger nach einem der Ansprüche 1 bis 8, ferner umfassend ein oder mehrere zusätzliche Thermoelemente, wobei die Thermoelemente so in das Keramikmaterial eingebettet sind, dass sich Übergänge der Thermoelemente an verschiedenen Stellen befinden.

10. Aerosolerzeuger nach einem der Ansprüche 1 bis 8, wobei das Thermoelement eine Thermosäule (60) umfasst, wobei die Thermosäule zwei oder mehr Thermoelementübergänge umfasst, die in das Keramikmaterial an verschiedenen Stellen eingebettet sind.

11. Verbrauchsmaterial (30) für ein elektronisches Aerosolbereitstellungssystem (10), umfassend einen Aerosolerzeuger nach einem der Ansprüche 1 bis 10 und einen Lagerbereich für aerosolerzeugendes Material (50) zum Lagern von aerosolerzeugendem Material.

12. Elektronisches Aerosolbereitstellungssystem (10), umfassend einen Aerosolerzeuger nach einem der Ansprüche 1 bis 10 und eine Steuerung (8), die dazu ausgelegt ist, eine Temperatur der elektrischen Heizvorrichtung aus der temperaturabhängigen Spannung zu bestimmen, die durch das Thermoelement bereitgestellt wird.

13. Elektronisches Aerosolbereitstellungssystem (10), umfassend einen Aerosolerzeuger (5) nach Anspruch 9 oder 10 und eine Steuerung (8), die dazu ausgelegt ist, ein Temperaturprofil der elektrischen Heizvorrichtung aus einer oder mehreren temperaturabhängigen Spannungen zu bestimmen, die durch die Thermoelemente oder die Thermosäule bereitgestellt werden.

14. Elektronisches Aerosolbereitstellungssystem nach Anspruch 12 oder Anspruch 13, wobei die Steuerung die Temperatur oder das Temperaturprofil kontinuierlich bestimmt.

15. Elektronisches Aerosolbereitstellungssystem nach Anspruch 12, 13 oder 14, wobei die Steuerung ferner dazu ausgelegt ist, den Betrieb der elektrischen Heizvorrichtung in Reaktion auf die bestimmte Temperatur oder das bestimmte Temperaturprofil zu steuern.

## Revendications

1. Générateur d'aérosol (5) pour un système électronique de délivrance d'aérosol (10), comprenant :
un dispositif de chauffage électrique (4) comprenant un matériau céramique ;
un composant de transfert de matériau générant un aérosol (6) destiné à apporter un matériau générant un aérosol depuis une zone de stockage de matériau générant un aérosol (50) au dispositif de chauffage électrique afin qu'il chauffe pour générer un aérosol ; et **caractérisé par** un thermocouple (45) incorporé dans le matériau céramique de telle sorte qu'une jonction du thermocouple est en contact avec le matériau céramique, et utilisable pour fournir par le biais de l'effet thermoélectrique une tension dépendante de la température à partir de laquelle une température du dispositif de chauffage électrique peut être déterminée.

2. Générateur d'aérosol selon la revendication 1, dans lequel le matériau céramique est non poreux.

3. Générateur d'aérosol selon la revendication 1, dans lequel le matériau céramique est poreux.

4. Générateur d'aérosol selon la revendication 3, dans lequel le matériau céramique est poreux et incorpore à la fois le composant de transfert générant un aérosol et le dispositif de chauffage électrique.

5. Générateur d'aérosol selon la revendication 1, dans lequel le matériau céramique a une structure composite comprenant une première partie (40) formée à partir d'un matériau céramique non poreux assemblée à une deuxième partie (6) formée à partir d'un matériau céramique poreux, dans lequel le thermocouple est incorporé dans la première partie, et dans lequel le composant de transfert de matériau générant un aérosol constitue la deuxième partie.

6. Générateur d'aérosol selon l'une quelconque des revendications 1 à 5, dans lequel le dispositif de chauffage électrique comprend un élément chauffant électriquement conducteur (58 ; 59) incorporé dans ou formé sur la surface du matériau céramique, le matériau céramique étant électriquement isolant.

7. Générateur d'aérosol selon l'une quelconque des revendications 1 à 5, dans lequel le matériau céramique est un matériau céramique électriquement conducteur pourvu de contacts électriques (56a, 56b) afin d'être utilisable comme élément chauffant.

8. Générateur d'aérosol selon l'une quelconque des revendications 1 à 7, dans lequel le thermocouple est incorporé dans la céramique de telle sorte que la jonction (42) du thermocouple est située au niveau ou près d'un point central entre contacts électriques du dispositif de chauffage électrique.

9. Générateur d'aérosol selon l'une quelconque des revendications 1 à 8, comprenant en outre un ou plusieurs thermocouples supplémentaires, les thermocouples étant incorporés dans le matériau céramique de telle sorte que les jonctions des thermocouples se trouvent à différents emplacements.

10. Générateur d'aérosol selon l'une quelconque des revendications 1 à 8, dans lequel le thermocouple constitue une thermopile (60), la thermopile comprenant au moins deux jonctions de thermocouple incorporées dans le matériau céramique à différents emplacements.

11. Consommable (30) pour un système électronique de délivrance d'aérosol (10) comprenant un générateur d'aérosol selon l'une quelconque des revendications 1 à 10 et une zone de stockage de matériau générant un aérosol (50) destinée à stocker un matériau générant un aérosol.

12. Système électronique de délivrance d'aérosol (10) comprenant un générateur d'aérosol selon l'une quelconque des revendications 1 à 10, et un contrôleur (8) conçu pour déterminer une température du dispositif de chauffage électrique à partir de la tension dépendante de la température fournie par le thermocouple.

13. Système électronique de délivrance d'aérosol (10) comprenant un générateur d'aérosol (5) selon la revendication 9 ou la revendication 10, et un contrôleur (8) conçu pour déterminer un profil de température du dispositif de chauffage électrique à partir d'une ou plusieurs tensions dépendantes de la température fournies par les thermocouples ou la thermopile.

14. Système électronique de délivrance d'aérosol selon la revendication 12 ou la revendication 13, dans lequel le contrôleur détermine la température ou le profil de température en continu.

15. Système électronique de délivrance d'aérosol selon la revendication 12, 13 ou 14, dans lequel le contrôleur est également conçu pour contrôler le fonctionnement du dispositif de chauffage électrique en réponse à la température ou au profil de température déterminés.
